# FASCICULE DE BREVET EUROPEEN

(11) **EP 3 414 119 B1**
(45) Date de publication et mention de la délivrance du brevet: **24.03.2021**
(21) Numéro de dépôt: 17706561.2
(22) Date de dépôt: 24.01.2017
(51) Int. Cl.: B60J 5/06, E05D 15/10

(54) **FERMETURE D'UN BOÎTIER DE RAIL CENTRAL DE PORTE LATÉRALE COULISSANTE DE VÉHICULE AUTOMOBILE**
VERSCHLUSS EINES ZENTRALEN SCHIENENGEHÄUSES EINER SEITENSCHIEBETÜR EINES KRAFTFAHRZEUGS
CLOSURE OF A CENTRAL RAIL HOUSING OF A SLIDING SIDE DOOR OF A MOTOR VEHICLE

(30) Priorité: 09.02.2016 FR 1651032
(43) Date de publication de la demande: 19.12.2018
(73) Titulaire: PSA Automobiles SA, 78300 Poissy (FR)
(72) Inventeur: PODVIN, Christophe, 78180 Montigny le Bretonneux (FR); BERGER, Patrick, 25200 Montbéliard (FR); DRAPT, Christophe, 90000 Belfort (FR)
(74) Mandataire: Fernandez, Francis Lionel
(86) Numéro de dépôt international: PCT/FR2017/050141
(87) Numéro de publication internationale: WO 2017/137677

(56) Documents cités:
- EP-A1- 2 060 718
- JP-A- H11 278 057
- JP-A- 2000 168 364
- JP-A- 2013 043 517

## Description

L'invention a trait au domaine des véhicules automobiles comprenant une porte latérale coulissante, en particulier des véhicules automobiles utilitaires. Plus particulièrement, l'invention a trait à la carrosserie de véhicules automobiles.

Un véhicule automobile utilitaire comprenant une porte latérale coulissante dispose d'un accès latéral pour charger du matériel. Il est généralement recherché à ce que l'accès latéral soit de taille suffisante pour l'embarquement de matériel encombrant. La largeur de l'accès latéral dépend de la largeur de l'ouverture réalisée dans la carrosserie pour cet accès, elle dépend aussi de la course de la porte latérale coulissante pour dégager cette ouverture. La porte latérale coulissante comprend généralement deux chariots avant supérieur et inférieur aptes à coulisser dans des rails de guidage sur la carrosserie, au-dessus et au-dessous de l'ouverture pour l'accès ; elle comprend aussi un chariot arrière apte à coulisser dans un rail central sur la carrosserie et s'étendant vers l'arrière depuis l'ouverture pour l'accès vers l'arrière du véhicule. Pour les modèles de véhicules utilitaires de petite taille, la taille du rail central est cependant limitée par la longueur du véhicule ; la course de la porte coulissante pour dégager l'ouverture pour l'accès peut être insuffisante par exemple pour le chargement de matériel disposé sur une palette de transport de format standard.

Le document de brevet FR 2 820 453 B1 divulgue un véhicule automobile comprenant une carrosserie et une porte latérale coulissante sur la carrosserie. La carrosserie comprend une paroi latérale, une paroi arrière jointive avec la paroi latérale, et un boîtier formant une cavité longitudinale recevant un rail de guidage de la porte latérale coulissante, ledit boîtier s'étendant horizontalement sur la face intérieure de la paroi latérale. Le véhicule comprend aussi un couvercle de fermeture de l'extrémité arrière du rail de guidage. Cet enseignement est intéressant en ce que le rail est libre pour la course du chariot ce qui est favorable à la longueur de la course. Un espace suffisant est cependant nécessaire entre l'extrémité arrière du rail et la paroi arrière de la carrosserie pour le montage du couvercle de fermeture sur le rail, ce qui implique une longueur suffisante du véhicule Le document JP 2013 043517 A divulgue une carrosserie similaire, qui montre les caractéristiques du préambule de la revendication 1.

L'invention a pour objectif de proposer une solution palliant au moins l'un des inconvénients de l'état de la technique, plus particulièrement de l'état de la technique susmentionné. En particulier, l'invention a pour objectif de trouver une solution de carrosserie de véhicule automobile pour augmenter la longueur de course d'un rail arrière central de guidage de porte latérale coulissante et qui soit économique.

L'invention a pour objet une carrosserie de véhicule automobile, comprenant : une paroi latérale ; une paroi arrière jointive avec la paroi latérale ; un boîtier formant un rail de guidage d'une porte coulissante du véhicule ou une cavité longitudinale apte à recevoir ledit rail, ledit boîtier s'étendant horizontalement sur la face intérieure de la paroi latérale ; remarquable en ce qu'elle comprend, en outre : un couvercle de fermeture de l'extrémité arrière du boîtier, ledit couvercle épousant au moins partiellement le profil de l'extrémité arrière du boîtier et prenant appui sur la face intérieure de la paroi arrière jointive.

Selon un mode avantageux de l'invention, le couvercle est en matériau plastique.

Selon un mode avantageux de l'invention, le couvercle comprend une paroi de fermeture avec une face intérieure, préférentiellement de forme concave, configurée pour contacter la surface externe de l'extrémité arrière du boîtier lors d'un mouvement de mise en place dudit couvercle suivant une direction transversale à, et dirigée vers, la paroi latérale. Le mouvement de mise en place se fait depuis l'intérieur de la carrosserie.

Avantageusement, la paroi de fermeture du couvercle épouse, en outre, la face intérieure de la paroi latérale.

Avantageusement, l'extrémité arrière du boîtier est à une distance de la paroi arrière jointive qui est comprise entre 0 et 150mm, préférentiellement entre 0 et 10mm, plus préférentiellement entre 10 et 50mm.

Selon un mode avantageux de l'invention, la face intérieure comprend à sa périphérie au moins un cordon de matière adhésive en contact avec le boîtier, la paroi latérale et/ou la paroi arrière jointive. Avantageusement, le cordon de matière adhésive est de type en mousse ou sous forme moussante.

Selon un mode avantageux de l'invention, la paroi de fermeture comprend une portion arrière généralement plane dont la face externe est en contact avec la paroi arrière jointive.

Avantageusement, la face externe de la portion arrière de la paroi de fermeture comprend, en outre, au moins un cordon de matière adhésive pour assurer, au moins partiellement, le contact de ladite face avec la paroi arrière jointive.

Avantageusement, les cordons de matière adhésive sur la face externe de la portion arrière de la paroi intérieure et sur la face intérieure de ladite paroi, forment un cordon unique ou mono cordon pour assurer une jonction continue entre d'un côté la paroi de fermeture, et de l'autre côté la surface externe de l'extrémité arrière, la paroi latérale et la paroi arrière jointive.

Selon un mode avantageux de l'invention, le couvercle comprend des moyens de fixation par clippage avec la paroi arrière jointive, lesdits moyens coopérant préférentiellement avec au moins un orifice de ladite paroi. Avantageusement, le couvercle est réalisé par moulage de matière plastique, et les moyens de fixation par clippage sont venus de matière avec le couvercle.

Selon un mode avantageux de l'invention, les moyens de fixation par clippage sont disposés, préférentiellement en saillie, sur la face extérieure de la paroi de fermeture du couvercle.

Avantageusement, les moyens de fixation par clippage comprennent au moins deux clips de fixation, chacun desdits clips coopérant avec un orifice correspondant dans la paroi arrière jointive.

Avantageusement, le couvercle en plastique comprend des nervures de renfort s'étendant en saillie de la face extérieure de la paroi de fermeture du couvercle sur les moyens de fixation par clippage.

Selon un mode avantageux de l'invention, la paroi arrière jointive forme une gouttière de volet arrière du véhicule.

Avantageusement, le boîtier est un embouti métallique, la section de l'extrémité arrière dudit boîtier étant de profil moyen en U.

L'invention a également pour objet un procédé de ferrage d'une carrosserie de véhicule automobile, comprenant l'étape suivante : assemblage d'une paroi arrière de la carrosserie à une paroi latérale de ladite carrosserie comprenant un boîtier formant un rail de guidage d'une porte coulissante du véhicule ou une cavité longitudinale apte à recevoir ledit rail, ledit boîtier s'étendant horizontalement sur la face intérieure de la paroi latérale ; remarquable en ce que la carrosserie est conforme à l'invention et par les étapes préliminaires suivantes :
- fixation du couvercle de fermeture de l'extrémité arrière du boîtier sur la face intérieure de la paroi arrière de la carrosserie ;
- accostage, suivant une direction transversale à la paroi latérale, de la paroi arrière contre ladite paroi latérale, le couvercle venant épouser l'extrémité arrière du boîtier et prendre appui sur la face intérieure de la paroi arrière jointive.

Selon un mode avantageux de l'invention, l'étape de fixation du couvercle comprend l'insertion des moyens de clippage dudit couvercle sur la paroi arrière jointive.

Les mesures de l'invention sont intéressantes en ce que la carrosserie conforme à l'invention comprend un boîtier pour le logement d'un rail de guidage de porte latérale coulissante et un couvercle de l'extrémité arrière du boîtier qui est adapté de sorte à ce que la longueur de la course de la porte sur le rail peut être augmentée. En effet, le couvercle prend appui sur la paroi arrière du véhicule et vient épouser l'extrémité arrière du boîtier de rail. Aussi, il est monté à la carrosserie lors d'un procédé de ferrage facilitant le montage du couvercle. En effet, le procédé comprend une étape préliminaire de montage du couvercle sur la paroi arrière, la jonction du couvercle avec le boîtier se faisant alors de manière aisée lors de l'assemblage de la paroi arrière avec la paroi latérale. La carrosserie et son procédé de ferrage permettent d'éviter d'entreprendre une modification majeure de l'architecture du véhicule, par exemple d'éviter un allongement du véhicule, ce qui est économique.

D'autres caractéristiques et avantages de la présente invention seront mieux compris à l'aide de la description et des dessins parmi lesquels :
- La figure 1 est une vue extérieure d'une carrosserie de véhicule automobile utilitaire comprenant un boîtier de rail de guidage de porte latérale coulissante conforme à l'invention ;
- La figure 2 est une vue intérieure de la carrosserie de véhicule de la figure 1 avec une image principale et deux images annexes ;
- La figure 3 est une vue d'un sous-ensemble de la carrosserie des figures 1 et 2 lors d'une première étape préliminaire d'un procédé de ferrage de la carrosserie conforme à l'invention ;
- La figure 4 est vue de la carrosserie des figures 1 et 2 lors d'une deuxième étape préliminaire du procédé de ferrage de la carrosserie conforme à l'invention ;

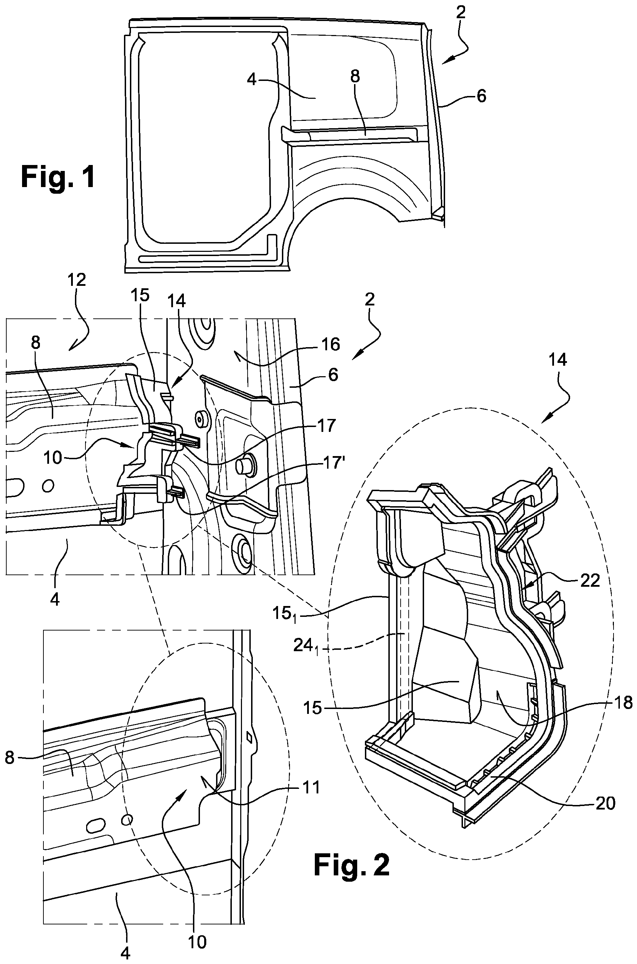

La figure 1 est une vue extérieure d'une carrosserie 2 de véhicule automobile conforme à l'invention. La carrosserie est en l'occurrence celle d'un véhicule utilitaire destiné à être équipé d'une porte latérale coulissante (non représentée) pour dégager une ouverture latérale dans la carrosserie. On peut voir l'ouverture d'accès dans la carrosserie, la porte étant destinée à fermer cette ouverture en position fermée et à coulisser sur la carrosserie vers l'arrière du véhicule (à droite sur l'image) en position ouverte. La carrosserie comprend une paroi latérale 4, dans laquelle l'ouverture d'accès est réalisée, une paroi arrière jointive 6 avec la paroi latérale et un boîtier 8. Le boîtier 8 forme un rail de guidage de la porte coulissante ou une cavité longitudinale apte à recevoir un rail de guidage (non représenté) et s'étendant horizontalement sur la face intérieure (non visible) de la paroi latérale. La carrosserie 2 comprend, en outre, un couvercle (non visible) de fermeture de l'extrémité arrière du boîtier 8 et qui prend appui sur la paroi arrière 6 de la carrosserie. Dans le mode particulier de l'invention ici présenté, la paroi arrière jointive 6 forme une gouttière de volet arrière du véhicule.

En référence aux figures 2, 3 et 4 du dessin il est à noter qu'on nommera par des sous-ensembles de la carrosserie, certains éléments de la carrosserie représentés assemblés ensemble.

La figure 2 précise l'agencement de la carrosserie 2 conforme à l'invention. Elle comprend une image principale (en haut), et deux images annexes (en bas à gauche et en bas à droite) pour visualiser précisément des parties de la carrosserie non visibles sur la figure principale.

Nous allons nous attacher dans le paragraphe suivant à décrire l'image principale de la figure 2.

L'image principale de la figure 2 est une vue intérieure de la carrosserie 2 de véhicule automobile conforme à l'invention. On peut voir de la gauche vers la droite sur l'image, la face intérieure 12 de la paroi latérale 4, le boîtier 8 de rail de guidage, le couvercle 14 de fermeture de l'extrémité arrière 10 du boîtier 8 et enfin la face intérieure 16 de la paroi arrière 6. Le couvercle de fermeture du boîtier épouse le profil de l'extrémité arrière 10 du boîtier 8 et prend appui sur la face intérieure 16 de la paroi arrière jointive 6. En d'autres termes, le couvercle s'étend entre l'extrémité arrière du boîtier et la face intérieure de la paroi arrière. Le couvercle 14 est en matériau plastique. Cette mesure de l'invention est intéressante pour mettre à forme le couvercle de manière adaptée. Dans le mode préféré de l'invention ici présenté, la carrosserie comprend des moyens de fixation par matière adhésive (non visible) du couvercle avec l'extrémité arrière du boîtier et avec la paroi arrière jointive. Aussi, le couvercle 14 comprend des moyens de fixation par clippage avec la paroi arrière jointive 6 ; ces moyens de clippage peuvent coopérer avec au moins un orifice de la paroi arrière jointive 6. Avantageusement, le couvercle 14 est réalisé par moulage de matière plastique, et les moyens de fixation par clippage sont venus de matière avec le couvercle. On peut voir sur l'image les moyens de clippage sous la forme de deux clips 17 et 17' sur le couvercle, chacun des clips étant engagé dans un orifice correspondant sur la paroi arrière jointive. Le couvercle 14 comprend une paroi de fermeture 15 avec une face intérieure (non visible) qui épouse le profil de l'extrémité arrière 10 du boîtier 8. Pour éviter toute ambiguïté, il est à noter que la face intérieure de la paroi de fermeture 15 est orientée vers l'extérieur du véhicule. En d'autres termes, la face intérieure est celle qui est à l'opposé de la face du couvercle qui est visible sur cette image principale. La face intérieure de la paroi de fermeture 15 est configurée pour contacter la surface externe de l'extrémité arrière du boîtier lors d'un mouvement de mise en place du couvercle suivant une direction transversale à la paroi latérale, cette direction étant dirigée vers la paroi latérale 4. Le mouvement de mise en place se fait depuis l'intérieur de la carrosserie. Cette mesure de l'invention est favorable à un montage aisé du couvercle. En particulier, la paroi de fermeture 15 du couvercle 14 peut, en outre, épouser, au moins en partie, la face intérieure 12 de la paroi latérale 4. Dans le mode particulier de l'invention ici présenté, la face intérieure de la paroi de fermeture 15 peut épouser la face intérieure 12 de la paroi latérale 4 et ce en partant de la jonction de l'extrémité arrière 10 du boîtier 8 avec ladite paroi 4 et jusqu'à la liaison avec la paroi arrière jointive 6. Ce mode de réalisation de l'invention est particulièrement intéressant en ce qu'il permet d'assurer l'étanchéité de la carrosserie à des projections d'eau sur le boîtier.

Nous allons nous attacher dans le paragraphe suivant à décrire la première image annexe (en bas à gauche) de la figure 2.

La première image annexe de la figure 2 est une vue d'un premier sous ensemble de la carrosserie selon le même angle de vue que l'image principale de la figure 2. Ce premier sous ensemble comprend le boîtier 8 monté sur la paroi latérale 4 de la carrosserie. Il est à noter, mais cela pourrait être implicite pour l'homme de l'art, que la paroi latérale comprend une fenêtre longitudinale pour l'accès d'un chariot de la porte coulissante, ladite fenêtre étant située en vis-à-vis de la cavité formée par le boîtier 8. C'est de cette fenêtre que des projections d'eau pourraient pénétrer dans la carrosserie. On peut voir sur l'image un enjoliveur sur la paroi latérale 4, ce dernier refermant l'extrémité arrière de la fenêtre. L'enjoliveur peut aussi comprendre des moyens d'étanchéité avec la carrosserie. Il est à noter que la face intérieure de la paroi de fermeture (non représentée) peut, en outre, coopérer par contact avec cet enjoliveur, au moins partiellement.

Nous allons nous attacher dans le paragraphe suivant à décrire la deuxième image annexe (en bas à droite) de la figure 2.

La deuxième image annexe de la figure 2 est une vue du couvercle 14 de la carrosserie conforme à l'invention, cette vue est réalisée dans un sens opposé à celui de l'image principale de la figure 2. On peut voir la paroi de fermeture 15 du couvercle avec la face intérieure 18 qui est visible sur l'image et qui est en l'occurrence de forme moyenne concave. Dans le mode de réalisation particulier ici représenté, la paroi de fermeture 15 comprend une portion arrière 15₁ généralement plane, et dont la face externe 24₁ est en contact avec la paroi arrière jointive. Cette mesure de l'invention est intéressante en ce qu'elle est favorable à la stabilité du couvercle 14 en appui sur la paroi arrière jointive. La face intérieure 18 peut comprendre, en outre, à sa périphérie 22, un ou plusieurs cordons de matière adhésive 20 en contact avec le boîtier, la paroi latérale et/ou la paroi arrière jointive. En l'occurrence, la face externe 24₁ de la portion arrière 15₁ de la paroi de fermeture 15 comprend aussi un cordon de matière adhésive 20 qui assure le contact de ladite face avec la paroi arrière jointive. On peut voir ledit cordon en tirets interrompus sur l'image. Avantageusement, les cordons de matière adhésive 20 sur la face externe 24₁ de la portion arrière 15₁ de la paroi de fermeture 15 et sur la face intérieure 18 de ladite paroi, forment un cordon unique ou mono cordon pour assurer une jonction continue entre d'un côté la paroi de fermeture 15, et de l'autre côté la surface externe de l'extrémité arrière du boîtier, la paroi latérale et la paroi arrière jointive. A titre d'exemple, le cordon de matière adhésive 20 peut être du type en mousse ou de forme moussante. Cette mesure de l'invention est intéressante pour assurer une liaison jointive du couvercle 14 avec les parois correspondantes, au niveau du cordon ; la forme du cordon adhésif peut par ailleurs améliorer l'adhésivité et ou l'étanchéité. La paroi de fermeture 15 peut être réalisée par moulage et elle peut comprendre un logement ou un chemin tracé sur ladite paroi pour recevoir le cordon de matière adhésive. Cette mesure de l'invention est intéressante dans le cas où le cordon est appliqué manuellement sur le couvercle, et ce pour guider l'opérateur dans l'application du cordon.

Par ailleurs, en observant les deux images annexes de la figure 2, on peut noter sur l'image en bas à gauche que le boîtier 8 peut être un embouti métallique avec une extrémité arrière 10 dont la section peut être de profil en U ; on peut aussi noter que l'arête du bord de l'extrémité arrière du boîtier est de forme irrégulière. Sur l'image annexe en bas à droite, on peut voir la face intérieure 18 de la paroi de fermeture 15 dont le bord arrière est mis à forme de manière correspondante pour joindre le boîtier, selon le profil en U dudit boîtier et selon cette forme irrégulière de l'arête du boîtier. Revenant sur l'image annexe de gauche, on peut voir en l'occurrence la surface externe 11 de l'extrémité arrière 10 du boîtier 8 présenté en référence avec l'image principale de la figure 2, ladite surface externe étant contactée par la face intérieure 18 de forme concave de la paroi de fermeture 15.

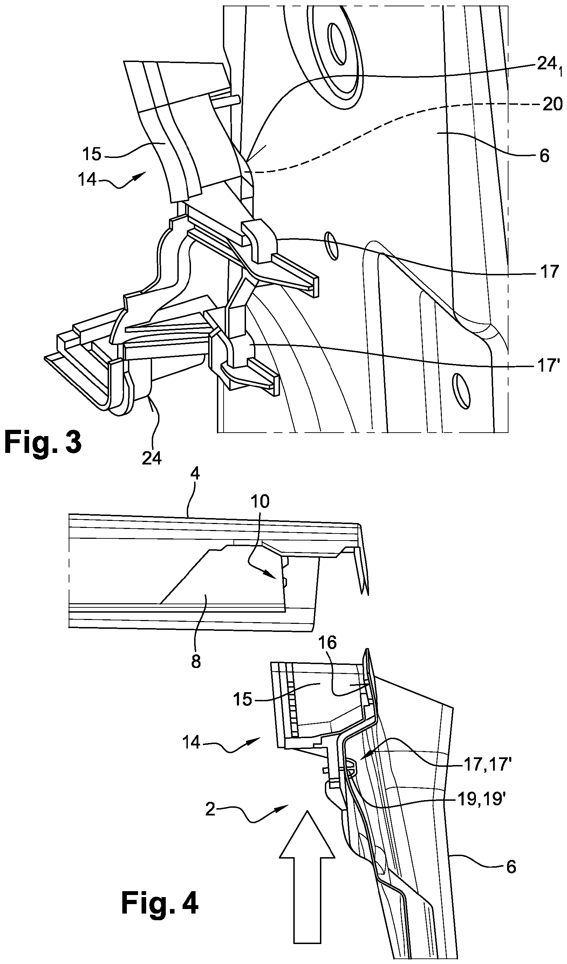

Les figures 3 et 4 illustrent les étapes d'un procédé de ferrage de la carrosserie conforme à l'invention.

La figure 3 est une vue d'un deuxième sous-ensemble de la carrosserie conforme à l'invention et qui est le résultat d'une étape préliminaire du procédé de ferrage de la carrosserie conforme à l'invention. Ce deuxième sous-ensemble comprend le couvercle 14 de fermeture de boîtier de rail assemblé à la face intérieure de la paroi arrière 6 de la carrosserie. L'étape préliminaire du procédé de ferrage consiste en la fixation du couvercle 14 sur la face intérieure de la paroi arrière 6 de la carrosserie. On peut voir les moyens de fixation par clippage, en l'occurrence les deux clips 17 et 17', qui sont disposés en saillie de la face extérieure 24 de la paroi de fermeture 15 du couvercle 14. Chacun des clips coopère, en l'occurrence, avec un orifice correspondant de la paroi arrière 6. Le couvercle en plastique 14 peut comprendre des nervures 18 et 18' de renfort s'étendant sur les moyens de clippage ; cette mesure de l'invention est favorable à la stabilité du couvercle 14, particulièrement une fois en contact avec le boîtier (non visible). En particulier, dans le sous-ensemble de la carrosserie ici réalisé, un cordon adhésif (non visible) sur la face externe 24₁ de la portion arrière de la paroi de fermeture 15 joint la face intérieure de la paroi arrière 6. Cette mesure est intéressante pour stabiliser la fixation ; elle peut aussi favoriser l'étanchéité à l'eau de la liaison entre la paroi de fermeture et la paroi arrière.

La figure 4 est une vue des premier et deuxième sous-ensembles de la carrosserie conforme à l'invention. Le premier sous-ensemble (en haut de l'image) a été décrit en référence avec la figure 2, le deuxième sous-ensemble (en bas de l'image) a été décrit en référence avec la figure 3. On peut noter sur le deuxième sous ensemble, les clips de fixation 17 et 17' du couvercle 14 qui coopèrent avec les orifices 19 et 19' sur la paroi. La figure illustre une étape préliminaire suivante du procédé de ferrage de la carrosserie conforme à l'invention, succédant à l'étape préliminaire décrite en référence avec la figure 3. Cette étape préliminaire suivante consiste en l'accostage, suivant une direction transversale à la paroi latérale 4, de la paroi arrière 6 contre ladite paroi latérale, le couvercle venant épouser l'extrémité arrière 10 du boîtier 8 et prendre appui sur la face intérieure de la paroi arrière jointive. Cette mesure de l'invention est intéressante en ce que l'accostage en Y est de trajectoire simple pour une mise en contact répétable, lors du ferrage, entre le couvercle 14 et l'extrémité arrière 10 du boîtier 8. A la suite des deux étapes préliminaires ici décrites vient l'étape suivante : assemblage de la paroi arrière 6 de la carrosserie à la paroi latérale 4 de ladite carrosserie.

## Revendications

1. Carrosserie (2) de véhicule automobile, comprenant :
- une paroi latérale (4) ;
- une paroi arrière jointive (6) avec la paroi latérale (4) ;
- un boîtier (8) formant un rail de guidage d'une porte coulissante du véhicule ou formant une cavité longitudinale apte à recevoir ledit rail, ledit boîtier s'étendant horizontalement sur la face intérieure de la paroi latérale (4) ;
- un couvercle (14) de fermeture de l'extrémité arrière (10) du boîtier (8), ledit couvercle épousant au moins partiellement le profil de l'extrémité arrière (10) du boîtier ;
**caractérisée en ce que** le couvercle (14) prend appui sur la face intérieure (16) de la paroi arrière jointive (6).

2. Carrosserie (2) selon la revendication 1, **caractérisée en ce que** le couvercle (14) est en matériau plastique.

3. Carrosserie (2) selon l'une des revendications 1 et 2, **caractérisée en ce que** le couvercle comprend une paroi de fermeture (15) avec une face intérieure (18), préférentiellement de forme concave, configurée pour contacter la surface externe (11) de l'extrémité arrière (10) du boîtier (8) lors d'un mouvement de mise en place dudit couvercle (14) suivant une direction transversale à, et dirigée vers, la paroi latérale (4).

4. Carrosserie (2) selon la revendication 3, **caractérisée en ce que** la face intérieure (18) comprend à sa périphérie (22) au moins un cordon de matière adhésive (20) en contact avec le boîtier (8), la paroi latérale (4) et/ou la paroi arrière jointive (6).

5. Carrosserie (2) selon l'une des revendications 3 et 4, **caractérisée en ce que** la paroi de fermeture (15) comprend une portion arrière (15₁) généralement plane dont la face externe (24₁) est en contact avec la paroi arrière jointive (6).

6. Carrosserie (2) selon l'une des revendications 1 à 5, **caractérisée en ce que** le couvercle (14) comprend des moyens de fixation par clippage (17, 17') avec la paroi arrière jointive (6), lesdits moyens coopérant préférentiellement avec au moins un orifice (19, 19') de ladite paroi.

7. Carrosserie (2) selon la revendication 6 et l'une des revendications 3 à 5, **caractérisée en ce que** les moyens de fixation (17, 17') par clippage sont disposés, préférentiellement en saillie, sur la face extérieure (24) de la paroi de fermeture (15) du couvercle (14).

8. Carrosserie (2) selon l'une des revendications 1 à 7, **caractérisée en ce que** la paroi arrière jointive (6) forme une gouttière de volet arrière du véhicule.

9. Procédé de ferrage d'une carrosserie (2) de véhicule automobile, comprenant l'étape suivante :
- assemblage d'une paroi arrière (6) de la carrosserie (2) à une paroi latérale (4) de ladite carrosserie (2) comprenant un boîtier (8) formant un rail de guidage d'une porte coulissante du véhicule ou formant une cavité longitudinale apte à recevoir ledit rail, ledit boîtier s'étendant horizontalement sur la face intérieure (12) de la paroi latérale (4) ;
**caractérisé en ce que** la carrosserie (2) est selon l'une des revendications 1 à 8, et par les étapes préliminaires suivantes :
- fixation du couvercle (14) de fermeture de l'extrémité arrière (10) du boîtier (8) sur la face intérieure (16) de la paroi arrière (6) de la carrosserie ;
- accostage, suivant une direction transversale à la paroi latérale (4), de la paroi arrière (6) contre ladite paroi latérale, le couvercle (14) venant épouser l'extrémité arrière (10) du boîtier (8) et prendre appui sur la face intérieure (16) de la paroi arrière jointive (6).

10. Procédé de ferrage selon la revendication 9, **caractérisé en ce que** la carrosserie (2) est selon l'une des revendications 6 et 7, l'étape de fixation du couvercle comprenant l'insertion des moyens de clippage (17, 17') dudit couvercle (14) sur la paroi arrière jointive (6).

## Patentansprüche

1. Karosserie (2) für Kraftfahrzeuge, bestehend aus:
- eine Seitenwand (4);
- eine mit der Seitenwand (4) aneinanderstoßende Rückwand (6);
- ein Gehäuse (8), das eine Führungsschiene einer Schiebetür des Fahrzeugs bildet oder einen zur Aufnahme der Führungsschiene geeigneten Längshohlraum bildet, wobei sich das Gehäuse horizontal auf der Innenseite der Seitenwand (4) erstreckt;
- einem Verschlussdeckel (14) für das hintere Ende (10) des Gehäuses (8), wobei der Deckel zumindest teilweise an das Profil des hinteren Endes (10) des Gehäuses angepasst ist;
**Dadurch gekennzeichnet, dass** der Deckel (14) an der Innenseite (16) der aneinanderstoßenden Rückwand (6) abgestützt ist.

2. Karosserie (2) nach Anspruch 1, **dadurch gekennzeichnet, dass** der Deckel (14) aus Kunststoff besteht.

3. Karosserie (2) nach einem der Ansprüche 1 und 2, **dadurch gekennzeichnet, dass** die Abdeckung eine Verschlusswand (15) mit einer vorzugsweise konkav geformten Innenfläche (18) aufweist, die so konfiguriert ist, dass sie die Außenfläche (11) des hinteren Endes (10) des Gehäuses (8) bei einer Bewegung zum Einsetzen der Abdeckung (14) in eine gerichtete Querrichtung berührt Gegen die Seitenwand (4).

4. Karosserie (2) nach Anspruch 3, **dadurch gekennzeichnet, dass** die Innenfläche (18) an ihrem Umfang (22) mindestens einen Strang aus Klebematerial (20) aufweist, der mit dem Gehäuse (8), der Seitenwand (4) und/oder der aneinanderstoßenden Rückwand (6) in Kontakt steht.

5. Karosserie (2) nach einem der Ansprüche 3 und 4, **dadurch gekennzeichnet, dass** die Abschlusswand (15) einen im Allgemeinen ebenen hinteren Abschnitt (151) aufweist, dessen Außenseite (241) mit der aneinanderstoßenden hinteren Wand (6) in Kontakt steht.

6. Karosserie (2) nach einem der Ansprüche 1 bis 5, **dadurch gekennzeichnet, dass** die Abdeckung (14) Befestigungsmittel (17, 17') durch Klicken mit der aneinanderstoßenden Rückwand (6) aufweist, wobei die Mittel vorzugsweise mit mindestens einer Öffnung (19, 19') der Wand zusammenwirken.

7. Karosserie (2) nach Anspruch 6 und einem der Ansprüche 3 bis 5, **dadurch gekennzeichnet, dass** die Clipbefestigungsmittel (17, 17') vorzugsweise vorspringend an der Außenseite (24) der Verschlusswand (15) des Deckels (14) angeordnet sind.

8. Karosserie (2) nach einem der Ansprüche 1 bis 7, **dadurch gekennzeichnet, dass** die aneinanderstoßende Rückwand (6) eine hintere Klappenrinne des Fahrzeugs bildet.

9. Verfahren zum Schließen einer Kraftfahrzeugkarosserie (2) mit folgendem Schritt:
- Verbindung einer Rückwand (6) des Aufbaus (2) mit einer Seitenwand (4) des Aufbaus (2) mit einem Gehäuse (8), das eine Führungsschiene für eine Schiebetür des Fahrzeugs bildet oder einen Längshohlraum bildet, der zur Aufnahme dieser Schiene geeignet ist, wobei sich das Gehäuse horizontal auf der Innenseite (12) der Seitenwand (4) erstreckt;
**Dadurch gekennzeichnet, dass** die Karosserie (2) nach einem der Ansprüche 1 bis 8 und in den folgenden Vorstufen ausgebildet ist:
- Befestigung des Verschlussdeckels (14) des hinteren Endes (10) des Gehäuses (8) an der Innenseite (16) der Karosserierückwand (6);
- in einer Richtung quer zur Seitenwand (4) der Rückwand (6) an der Seitenwand anliegt, wobei der Deckel (14) an dem hinteren Ende (10) des Gehäuses (8) anliegt und an der Innenseite (16) der aneinanderstoßenden Rückwand (6) anliegt.

10. Verfahren zum Schließen nach Anspruch 9, **dadurch gekennzeichnet, dass** die Karosserie (2) nach einem der Ansprüche 6 und 7 ist, wobei der Schritt des Befestigens der Abdeckung das Einsetzen der Klippmittel (17, 17') der Abdeckung (14) auf die aneinanderstoßende Rückwand (6) umfasst.

## Claims

1. Motor vehicle body (2), including:
- a side wall (4);
- a side wall (6) with the side wall (4);
- a case (8) forming a guide rail of a sliding door of the vehicle or forming a longitudinal cavity capable of receiving the rail, the case extending horizontally to the inner face of the side wall (4);
- a lid (14) closing the rear end (10) of the case (8), the lid at least partially fitting the profile of the rear end (10) of the case;
characterized as the lid (14) is supported on the inner face (16) of the joining rear wall (6).

2. Body (2) according to claim 1, characterized as the lid (14) is made of plastic material.

3. Body (2) according to one of claims 1 and 2, characterized as the lid includes a closure wall (15) with an inner face (18), preferably concave, configured to contact the outer surface (11) of the rear end (10) of the housing (8) during a movement to place the lid (14) in a cross-sectional direction, and directed towards, side wall (4).

4. Body (2) according to claim 3, characterized that the inner face (18) includes at its periphery (22) at least one cord of adhesive material (20) in contact with the housing (8), the side wall (4) and/or the side wall (6).

5. Body (2) according to one of claims 3 and 4, **characterized by** the fact that the closure wall (15) consists of a generally flat rear portion (151) whose outer face (241) is in contact with the joining rear wall (6).

6. Body (2) according to one of the claims 1 to 5, characterized as the lid (14) includes means of fitting by clippage (17, 17') with the side wall (6), the means preferentially cooperating with at least one hole (19, 19') of the side wall.

7. Body (2) according to claim 6 and one of claims 3 to 5, **characterized by** the fact that the means of fixing (17, 17') per clippage are arranged, preferably in a protruding position, on the outer face (24) of the closure wall (15) of the lid (14).

8. Body (2) according to one of the claims 1 to 7, **characterized by** the fact that the joining rear wall (6) forms a gutter of the rear flap of the vehicle.

9. Ferrying process of a motor vehicle body (2), including the following step:
- assembly of a rear wall (6) of the body (2) to a side wall (4) of the body (2) comprising a housing (8) forming a guide rail of a sliding door of the vehicle or forming a longitudinal cavity capable of receiving the rail, the housing extending horizontally to the inner face (12) of the side wall (4);
**characterized by** the fact that the body (2) is in accordance with one of claims 1 to 8, and by the following preliminary steps:
- fixing of the lid (14) to close the rear end (10) of the case (8) on the inner face (16) of the rear wall (6) of the body;
- docking, following a cross direction to the lateral wall (4), of the rear wall (6) against the said lateral wall, the lid (14) joining the rear end (10) of the housing (8) and leaning on the inner face (16) of the joining rear wall (6).

10. Process of fermentation according to Claim 9, characterized as the body (2) is according to one of Claims 6 and 7, the stage of fixing the lid including the insertion of the means of cutting (17, 17') of the said lid (14) on the side back wall (6).
